## Europäisches Patentamt
## European Patent Office
## Office européen des brevets

(19)

(11) Numéro de publication: **0 097 545
B1**

(12) **FASCICULE DE BREVET EUROPEEN**

(45) Date de publication du fascicule du brevet:
04.09.85

(51) Int. Cl.⁴: **B 23 P 11/00,** F 16 B 21/20,
F 16 K 17/168

(21) Numéro de dépôt: 83401038.1

(22) Date de dépôt: **25.05.83**

(54) **Butee se fixant dans un alesage d'un dispositif.**

(30) Priorité: 09.06.82 FR 8210540

(43) Date de publication de la demande:
04.01.84 Bulletin 84/1

(45) Mention de la délivrance du brevet:
04.09.85 Bulletin 85/36

(84) Etats contractants désignés:
BE DE FR GB IT NL SE

(56) Documents cités:
EP - A - 0 046 321
DE - A - 2 105 990
FR - A - 1 128 374
FR - A - 1 543 416
FR - A - 2 375 530
GB - A - 1 155 758
US - A - 2 503 854

(73) Titulaire: ROBINETTERIE, S.F.R., S.A., 13 rue Jean
Jacques Rousseau, F-80390 Fressenneville (FR)

(72) Inventeur: Huveteau, Jean Louis, Cavee de Dargnies,
F-80390 Fressenneville (FR)

(74) Mandataire: Ecrepont, Robert, Cabinet
Ecrepont 12 Place Simon Vollant (Porte de Paris),
F-59800 Lille (FR)

ACTORUM AG

## Description

L'invention se rapporte à une butée se fixant dans un alésage d'un dispositif ainsi qu'au dispositif pourvu d'au moins une telle butée, telle, plus particulièrement mais non exclusivement, une soupape de sûreté.

Les soupapes de sûreté comprennent un corps délimitant une chambre dans laquelle débouchent trois manchons principaux dont un premier manchon logeant un ressort sollicitant constamment un clapet vers un siège consistant en un passage intercalé entre la chambre et le second manchon qui est raccordé à la source de fluide dont on veut limiter la pression.

Le clapet consiste en une cuvette logeant un joint d'étanchéité par lequel ledit clapet appuie sur son siège.

Sur sa face opposée à celle portant le joint, le clapet reçoit, directement ou par l'intermédiaire d'au moins une pièce, telle une rondelle ou une coupelle de centrage, la poussée du ressort qui, par ailleurs, doit prendre appui sous une butée associée au corps de manière à permettre un réglage de sa distance par rapport au siège et, de ce fait, un réglage de la pression de tarage du ressort.

Tant que la pression de ce fluide reste inférieure à celle pour laquelle le ressort a été réglé, le clapet reste appliqué contre le siège dont il obture le passage mais, aussitôt que cette pression atteint au moins celle pour laquelle le ressort a été réglé, le clapet se soulève de son siège et le fluide envahit la chambre d'où il s'échappe en empruntant le troisième manchon, généralement raccordé à un circuit de décharge.

La butée d'appui du ressort est également librement traversée axialement par une tige de levée manuelle dont la tête est saisie par une clef de manœuvre.

A ce jour, pour l'association au corps de la butée sous laquelle le ressort appuie directement ou indirectement, cette butée est généralement vissée dans l'alésage du corps ou sur la face externe du manchon.

Ce mode de montage, qui nécessite des opérations d'usinage importantes et un temps de montage assez long, conduit à un prix de revient assez élevé.

Afin de remédier à cet inconvénient, il est connu d'utiliser des butées en tôle d'acier emboutie de manière à présenter une cuvette de centrage du ressort au bord de laquelle cuvette est raccordée, par un faible arrondi, une jupe s'élevant concentriquement à la cuvette jusqu'à environ mi-hauteur de celle-ci avant de s'évaser en une collerette tronconique assez large et présentant donc à son extrémité libre, avant montage, un diamètre supérieur à celui de l'alésage appelé à recevoir la butée afin qu'au montage la jupe soit comprimée par l'alésage et qu'ensuite par réaction, elle s'applique énergiquement sur l'alésage.

Lorsque cette butée est emmanchée à force dans son alésage, compte tenu de la conicité de la collerette, la jupe tend à se rétracter élastiquement alors que, lorsque le ressort pousse sur le fond de la cuvette, le bord de la collerette s'imprime dans la paroi de l'alésage et réalise un autoblocage.

Malheureusement, n'appuyant sur la paroi de l'alésage que par sa collerette, cette butée en tôle emboutie est peu stable.

Pour pallier cet inconvénient, il est connu de caler dans la cuvette un guide coopérant par exemple avec la tige de levée manuelle, ce qui alors conduit toutefois à un prix de revient au moins aussi élevé que pour un montage par vissage.

Un résultat que l'invention vise à obtenir est une butée qui, tout en étant d'un prix de revient avantageux et de montage aisé, soit très stable.

A cet effet, l'invention a pour objet une butée du type cité plus haut, notamment caractérisée en ce que la jupe présente, à son extrémité par laquelle elle est raccordée à la cuvette, un diamètre s'ajustant pratiquement sans jeu dans l'alésage appelé à recevoir la butée.

Elle sera bien comprise à l'aide de la description ci-après faite, à titre d'exemple non limitatif, en regard du dessin ci-annexé, qui représente schématiquement:

— fig. 1 : une soupape pourvue d'une telle butée,
— fig. 2 : la butée en cours de montage,
— fig. 3 : la butée ainsi montée,
— fig. 4 : à plus grande échelle, un détail tiré de la fig. 3,
— fig. 5 et 6 : deux applications de cette butée,
— fig. 7 à 9 : une variante de réalisation de la butée,
— fig. 10 et 11 : une autre variante de réalisation de la butée.

En se reportant au dessin, on voit que la soupape comprend un corps 1 formant une chambre 2 dans laquelle débouchent trois manchons 3, 4 et 5 dont l'un d'eux communique avec la chambre 2 par l'intermédiaire d'un passage 6 réalisant le siège d'un obturateur 7 comprenant principalement un clapet 8 formé d'une cuvette 9 logeant un joint d'étanchéité 10.

Ce joint est pincé contre le fond 11 de la cuvette 9 par un moyen de fixation 12.

C'est par l'intermédiaire de ce joint 10 que le clapet appuie sur le siège 6 sous l'action d'un ressort 13 appuyant sur la face opposée 14, dite face arrière du clapet directement ou comme dans l'exemple représenté, par l'intermédiaire d'une membrane d'étanchéité 15 et d'une coupelle 16 d'appui et de centrage de la base dudit ressort.

Le ressort s'élève dans le manchon 1 qui, dans la chambre 2, est situé en face du siège 6 afin que sa partie supérieure trouve également appui sous une butée 17 associée au corps 1 de manière réglable.

Pincée entre la coupelle et la face arrière 14 du clapet avec toute la force du ressort, la partie médiane de la membrane 15 est associée de manière étanche avec ce clapet.

Pour obtenir la même étanchéité entre le corps 1 et le bord externe 18 de la membrane, ce bord est appliqué contre un rebord 19 usiné à cet effet dans le corps et pincé contre celui-ci par tout moyen connu tel une bague rapportée 20 ou par bridage ou vissage sur le corps du manchon logeant le ressort 13.

Afin de permettre la commande manuelle de ce clapet, l'obturateur 7 comprend en outre une tige de levée manuelle 21 dont le pied 22 est emprisonné dans un logement 23 présent à l'arrière du clapet alors que sa tête est saisie par une clef 24 principalement constituée par exemple par un volant de manœuvre 25.

Cette saisie par la clef 24 ne s'opère toutefois qu'après que la tige aura traversé librement le ressort 13 et la butée 17 sous laquelle appuie ce ressort.

De manière connue, cette butée 17 est emmanchée à force dans le manchon 3 et présente une cuvette 26 de centrage du ressort 13, au bord 27 de laquelle cuvette 26 est raccordée une jupe 28 s'élevant concentriquement à la cuvette.

Selon une caractéristique de l'invention, la jupe présente:

— à son extrémité 29, par laquelle elle est raccordée à la cuvette 26, un diamètre s'ajustant pratiquement sans jeu dans l'alésage 30 appelé à recevoir la butée,

— à son extrémité libre 31, avant montage, un diamètre supérieur à celui de l'alésage 30 appelé à recevoir la butée afin qu'au montage la jupe soit comprimée par l'alésage et qu'ensuite par réaction, elle s'applique énergiquement sur l'alésage 30.

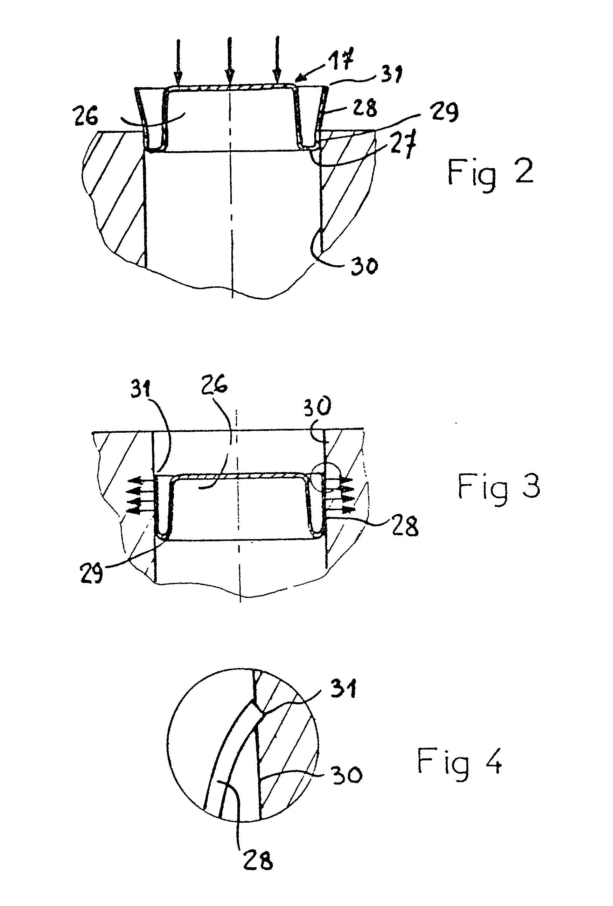

Même si, notamment dans le cas d'un précintrage de la jupe, celle-ci tend à s'incurver (fig. 4), la butée reste bien stable du fait de ses deux appuis répartis chacun à une extrémité opposée de sa paroi.

Ce précintrage peut notamment être créé afin que l'arête de l'extrémité libre tende à s'ancrer dans l'alésage pour assurer l'irréversibilité du mouvement.

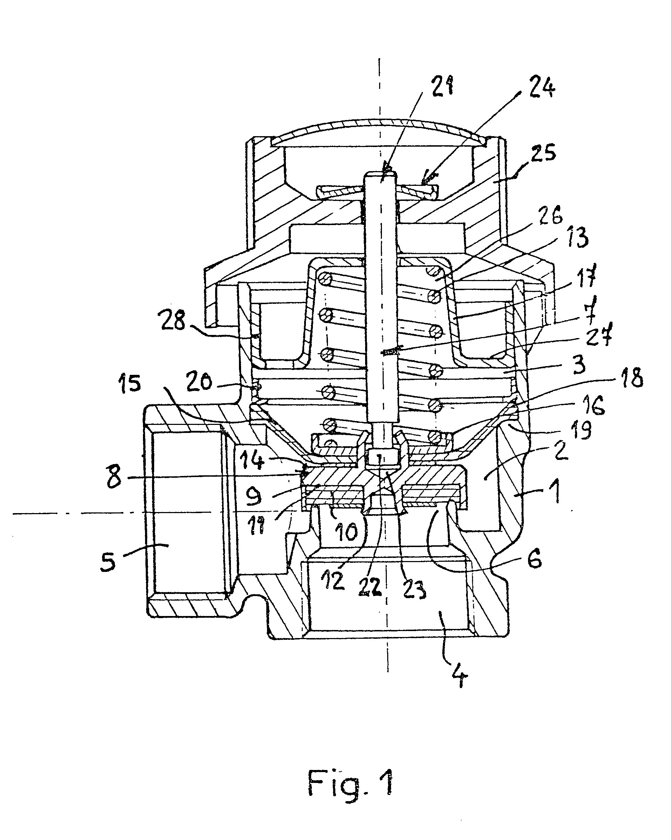

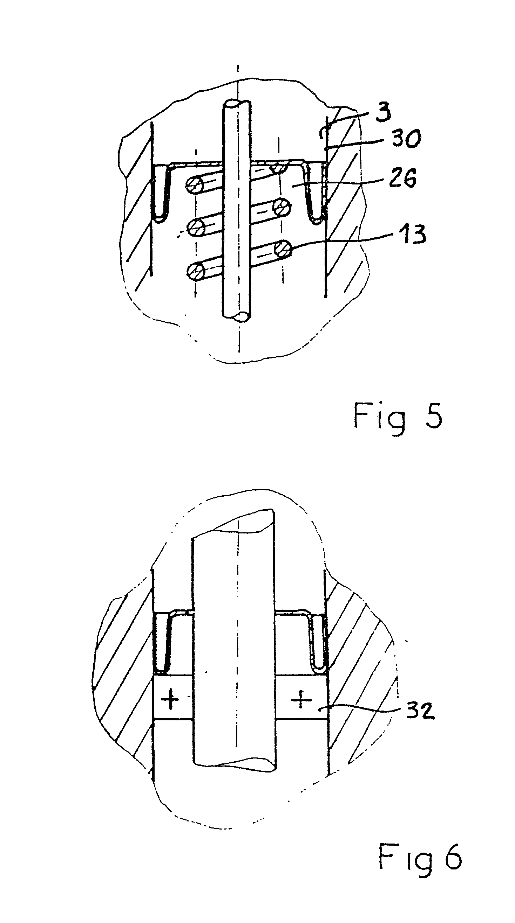

Indépendamment de son application dans les soupapes (fig. 1) ou pour asseoir un ressort (fig. 5), cette butée peut également servir au calage de toutes autres pièces 32 telles des roulements (fig. 6) et/ou servir de barrière à certains corps, c'est-à-dire servir de moyen d'étanchéité par exemple comme simple bouchon (fig. 3).

Cette butée peut être réalisée à partir de tout matériau plastique ou métallique ayant une bonne résistance à la déformation élastique.

Sa section qui correspond à celle du corps qui la reçoit est de préférence circulaire.

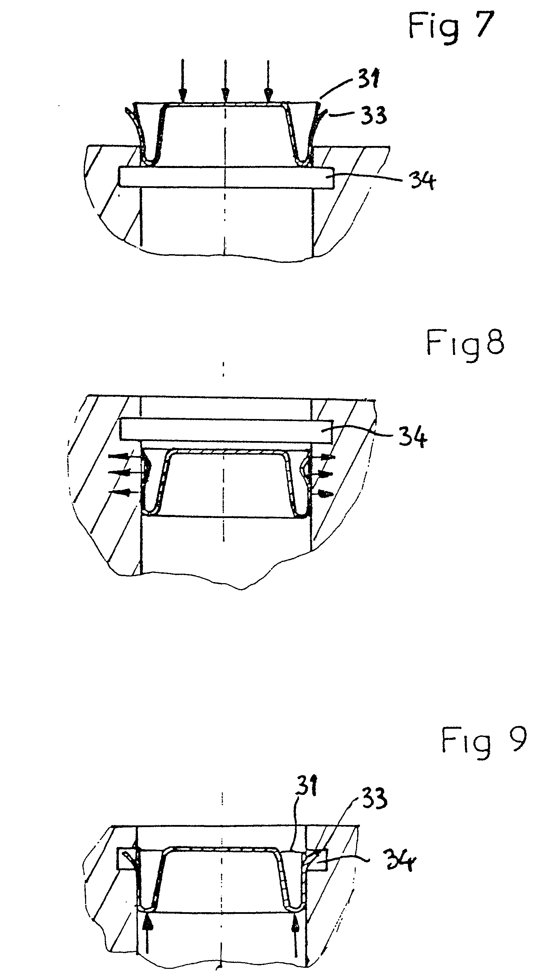

Dans une variante de réalisation (fig. 7 à 9), d'une part, dans l'extrémité libre 31 de la jupe est découpé au moins un cran 33 qui, avant montage, est cintré assez profondément vers l'extérieur et, d'autre part, dans l'alésage 30 est usinée au moins une gorge 34 apte à recevoir le cran 33 pour assurer un blocage absolu de la butée.

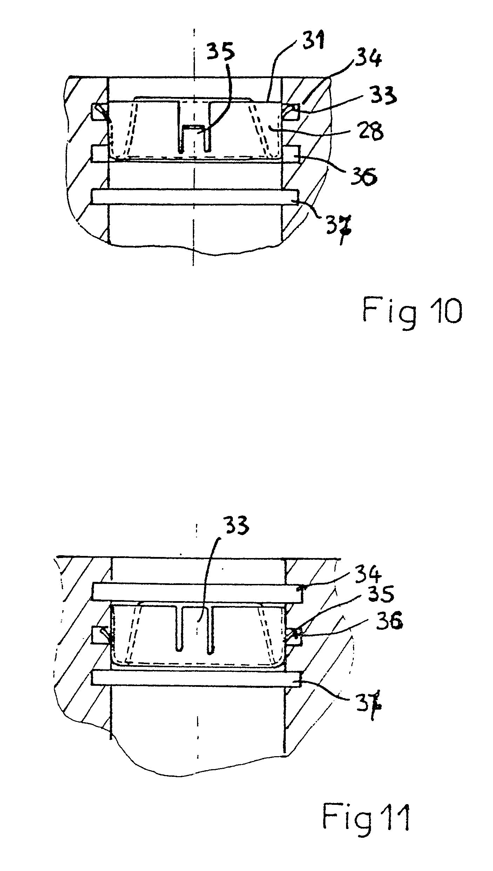

Dans une autre variante de réalisation de l'invention (fig. 10 et 11), l'extrémité libre 31 de la jupe 28 est pourvue de plusieurs crans 33, 35 s'étendant jusqu'à des distances différentes de l'extrémité libre 31 de la jupe 28.

Dans une variante de réalisation de l'invention, l'alésage présente plusieurs gorges 34, 36, 37.

La fonction de ces crans et/ou gorges est de permettre un coincement absolu en de nombreux niveaux mais aussi d'assurer un préassemblage, par exemple en attendant le tarage du ressort.

## Revendications

1. Butée (17) se fixant dans un alésage (30) d'un dispositif (1) dans lequel elle est emmanchée à force, laquelle butée, qui présente une cuvette (26) de centrage d'un ressort (13) au bord (27) de laquelle cuvette (26) est raccordée une jupe (28) s'élevant concentriquement à la cuvette et présentant à son extrémité libre (31), avant montage, un diamètre supérieur à celui de l'alésage (30) appelé à recevoir la butée afin qu'au montage la jupe soit comprimée par l'alésage et qu'ensuite par réaction elle s'applique énergiquement sur l'alésage (30), est caractérisée en ce que la jupe présente, à son extrémité (29) par laquelle elle est raccordée à la cuvette (26), un diamètre s'ajustant pratiquement sans jeu dans l'alésage (30) appelé à recevoir la butée.

2. Butée selon la revendication 1, caractérisée en ce que, d'une part, dans l'extrémité libre (31) de la jupe, est découpé au moins un cran (33) qui, avant montage, est cintré assez profondément vers l'extérieur et, d'autre part, dans l'alésage (30) est usinée au moins une gorge (34) apte à recevoir le cran (33) pour assurer un blocage absolu de la butée.

3. Butée selon la revendication 1 ou 2, caractérisée en ce que l'extrémité libre (31) de la jupe (28) est pourvue de plusieurs crans (33, 35) s'étendant jusqu'à des distances différentes de l'extrémité libre (31) de la jupe (28).

4. Butée selon la revendication 2 ou 3, caractérisée en ce que l'alésage présente plusieurs gorges (34, 36, 37) aptes à recevoir au moins un cran 33.

5. Dispositif, tel une soupape, caractérisé en ce qu'il est pourvu d'au moins une butée selon l'une quelconque des revendications 1 à 4.

## Patentansprüche

1. Anschlag (17), einsetzbar in eine Bohrung (30) eines Gerätes (1), in welche er unter Krafteinwirkung eingesetzt wird, wobei der Anschlag eine für die Zentrierung einer Feder (13) dienende Schale bzw. Mulde (26) aufweist, an deren Rand (27) eine sich konzentrisch zur Schale nach oben erstreckende Hülse (28) angeschlossen ist, deren freies Ende (31) vor der Montage einen grösseren Durchmesser als die den Anschlag aufnehmende Bohrung (30) aufweist, so dass die Hülse im Zuge der Montage durch die Bohrung zusammengedrückt und danach infolgedessen wirksam bzw. mit grosser Kraft an die Bohrung (30) gedrückt wird, dadurch gekennzeichnet, dass die Hülse an dem Ende (29), mit welchem sie mit der Schale (26) verbunden ist, einen Durchmesser aufweist, der sich in der den Anschlag aufnehmenden Bohrung (30) praktisch spielfrei anpasst bzw. angleicht.

2. Anschlag nach Anspruch 1, dadurch gekennzeichnet, dass einerseits an dem freien Ende (31) der Hülse wenigstens ein eingeschnittener Bereich bzw. eine Raste (33) ausgebildet und relativ weit nach aussen unten gebogen ist, und dass andererseits in der Bohrung (30) eine Vertiefung (34) ausgebildet ist, die den eingeschnittenen Bereich bzw. die Raste (33) aufnimmt, so dass der Anschlag zuverlässig festgelegt bzw. blockiert werden kann.

3. Anschlag nach einem der Ansprüche 1 oder 2, dadurch gekennzeichnet, dass das freie Ende (31) der Hülse (28) eine Vielzahl von eingeschnittenen Bereichen bzw. Rasten (33, 35) aufweist, die sich bis zu unterschiedlichen Höhen des freien Endes (31) der Hülse (28) erstrecken.

4. Anschlag nach einem der Ansprüche 2 oder 3, dadurch gekennzeichnet, dass die Bohrung eine Vielzahl von Vertiefungen (34, 36, 37) aufweist, die derart ausgelegt sind, dass sie wenigstens einen eingeschnittenen Bereich bzw. eine Raste (33) aufnehmen können.

5. Vorrichtung, beispielsweise ein Ventil, dadurch gekennzeichnet, dass dieses zumindest mit einem Anschlag nach einem der Ansprüche 1 bis 4 ausgestattet ist.

## Claims

1. An abutment (17) engageable in a bore (30) of an apparatus (1) in which it is forcibly fitted, the said abutment, having a centering cup (26) for a spring (13), to the edge (27) of which cup (26) there is connected a skirt (28) which rises concentrically with respect to the cup, and which has at its free end (31), prior to assembly, a larger diameter than that of the bore (30) which is designed to receive the abutment, such that, on assembly, the skirt is compressed by the bore and then, as a reaction, presses forcibly against the bore (30), characterised in that the skirt has, at the end (29) by which it is connected to the cup (26), a diameter which fits almost without clearance inside the bore (30) which is intended to receive the abutment.

2. An abutment according to Claim 1, characterized in that, on the one hand, at least one notch (33) is cut in the free end (31) of the skirt, which notch, prior to assembly, is bent quite sharply outwards and, on the other hand, at least one groove (34) intended to receive the notch is machined in the bore (30) to ensure complete jamming of the stop.

3. An abutment according to Claim 1 or 2, characterized in that the free end (31) of the skirt (28) is provided with a plurality of notches (33, 35) extending to different distances from the free end (31) of the skirt (28).

4. An abutment according to Claim 2 or 3, characterized in that the bore has a plurality of grooves (34, 36, 37) intended to receive at least one notch (33).

5. Apparatus, such as a valve, characterized in that it is provided with at least one abutment according to any one of Claims 1 to 4.

Fig. 1

Fig 2

Fig 3

Fig 4

Fig 5

Fig 6

**Fig 7**

**Fig 8**

**Fig 9**

11

Fig 10

Fig 11